# DEMANDE DE BREVET EUROPEEN

(11) **EP 4 589 343 A1**
(43) Date de publication de la demande: **23.07.2025**
(21) Numéro de dépôt: 25152647.1
(22) Date de dépôt: 17.01.2025
(51) Int. Cl.: G01V 3/165

(54) **DÉTECTEUR DE MÉTAUX PORTATIF À PUISSANCE DE DÉTECTION AMÉLIORÉE ET AJUSTABLE**

(30) Priorité: 19.01.2024 FR 2400577
(71) Demandeur: SARL XPLORER, 31320 Mervilla (FR)
(72) Inventeur: POURCHIER, Nicolas, 31400 TOULOUSE (FR); LOUBET, Alain, 31320 MERVILLA (FR)
(74) Mandataire: BARRE LAFORGUE

(57) **Abrégé**

L'invention concerne un détecteur de métaux (20) portatif de puissance de détection augmentée par l'ajout d'un convertisseur de puissance (25).

Le convertisseur de puissance (25) est déporté du disque de détection (22) et en particulier de l'organe de captation des perturbations électriques du champ électromagnétique produit par la ou les bobines émettrices (220). Cette déportation permet d'éviter notamment que la fréquence de travail du convertisseur de puissance (25) ne produise des perturbations du signal capté par l'organe de captation.

## Description

### [Domaine technique]

L'invention concerne un détecteur de métaux portatif qui présente une puissance de détection améliorée et ajustable en fonction de la complexité des substrats dans lesquels les recherches sont menées.

### [État de la technique antérieure]

Classiquement un détecteur de métaux comprend un disque de détection magnétique aussi appelé tête de détection. Le disque de détection est disposé à l'extrémité d'une canne qui porte à son extrémité supérieure une poignée et un boitier de commande. Le boitier de commande est configuré pour piloter le disque de détection qui comprend une bobine électromagnétique. Cette dernière est configurée pour générer un champ électromagnétique qui interagit avec des objets métalliques enfouis dans un substrat tel que le sol. Le champ électromagnétique induit des courants électriques dans ces objets métalliques qui produisent alors un signal détectable par la bobine électromagnétique.

La plupart des détecteurs de métaux comportent une électronique de traitement du signal capté par la bobine qui est traditionnellement associée au boitier de commande. L'électronique de traitement traite les signaux captés par la bobine et les relaye à l'utilisateur en produisant des signaux sonores ou visuels. Afin d'améliorer la qualité d'écoute des sons par l'utilisateur au cours de ses recherches, les détecteurs de métaux sont souvent équipés d'un casque qui est connecté au boitier de commande. Les détecteurs de métaux sont également équipés d'une électronique de puissance qui comprend notamment des moyens d'excitation de la bobine et d'une batterie qui sont généralement embarquées à l'intérieur ou à proximité du boitier de commande au niveau du manche du détecteur de métaux. Le courant d'excitation de la bobine émettrice et les signaux électriques mesurés par cette dernière ou par la bobine réceptrice sont alors transmis de manière filaire entre la poignée où sont logés l'électronique de puissance et l'électronique de traitement et la bobine électromagnétique.

La communication filaire entre la bobine et l'électronique de puissance et notamment les moyens d'excitation qui sont disposés, ici, dans le boitier de commande à distance de la bobine, implique une résistance qui nécessite de produire un courant électrique de tension élevée afin d'alimenter la bobine électromagnétique. En effet, la résistance d'un fil est proportionnelle à sa longueur et inversement proportionnelle à son diamètre. Ainsi, un fil électrique long et de petit diamètre produit une grande résistance qui dégrade le rendement d'alimentation de la bobine électromagnétique par effet joule et nécessite l'emploi d'une batterie de plus grande capacité.

Pour améliorer le rendement d'alimentation de la bobine, le document EP 2 910 979 décrit un détecteur de métaux dont le disque de détection embarque, en plus de la bobine électromagnétique, l'électronique de puissance dont notamment les moyens d'excitation de la bobine, l'électronique de traitement du signal, la batterie d'alimentation, mais aussi un émetteur/récepteur sans fil. L'émetteur/récepteur sans fil est configuré pour dialoguer avec un émetteur/récepteur sans fil compatible et embarqué dans le boitier de commande. La communication sans fil avec l'unité de contrôle du disque permet au boitier de commande de piloter le disque et de recevoir le signal capté par le disque. La position des moyens d'excitation placés à proximité de la bobine émettrice permet ainsi de limiter les pertes par effet joules qu'auraient notamment engendré un cordon de déport.

Bien que le rendement d'alimentation de la bobine émettrice soit meilleur, cette configuration pose des problèmes si l'on souhaite ajuster la puissance du champ magnétique émis par la bobine émettrice. Par exemple, si l'on souhaite augmenter la puissance du champ magnétique, il est connu dans un premier temps d'augmenter la valeur du courant d'excitation en réduisant la résistance série de la bobine tout en réduisant son inductance, mais les courants plus élevés entrainent des pertes importantes et le surdimensionnement des moyens d'excitation. L'autre solution connue est d'augmenter la tension d'excitation. Pour cela, un convertisseur de tension à découpage en configuration élévateur de tension est généralement employé. Ce dernier prend comme source l'énergie la tension de la batterie et produit en sortie une tension de valeur supérieure. Ce type de convertisseur à l'avantage d'offrir un rendement élevé, toutefois, il présente le défaut de générer un bruit électromagnétique rayonné, lié à la commutation du/des composants de découpage à une fréquence propre. Ce phénomène de bruitage du signal est d'autant plus problématique qu'il est difficile à filtrer lors du traitement du signal capté par la bobine. En effet, la bobine présente une sensibilité à des perturbations de l'ordre de quelques nanovolts de bruit en entrée.

Le document US 10,809,411 décrit un détecteur de métal qui comprend l'électronique de puissance dont les moyens d'excitation de la bobine mais aussi la batterie et l'électronique de traitement qui sont disposés dans un logement situé dans la canne du détecteur qui porte le disque de détection. Ce logement comporte également une unité de contrôle qui est configurée pour piloter l'électronique de puissance et l'électronique de traitement. L'unité de contrôle comporte, en sus, un émetteur/récepteur sans fil configuré pour dialoguer avec un émetteur/récepteur sans fil intégré au boitier de commande qui se situe à proximité de la poignée ou peut être déporté à la convenance de l'utilisateur, par exemple, dans un sac-à-dos. Cette configuration permet d'augmenter la capacité de la batterie sans pour autant perturber le signal capté par la bobine car la batterie est disposée dans la canne. Toutefois, l'électronique de puissance, et en particulier les moyens d'excitation appelés module de contrôle, sont ici reliés à la bobine par un câble qui produit à nouveau une résistance importante au passage du courant d'excitation de la bobine et dégrade de fait le rendement. Le module de contrôle est ici configuré pour transformer un courant continu en courant alternatif en vue d'exciter la bobine émettrice. Le courant d'excitation est donc un courant alternatif qui circule entre le module de contrôle et la bobine émettrice. Ce courant d'excitation est en général conduit par un câble d'excitation qui dégrade le rendement d'excitation, notamment lorsque le module de contrôle se trouve à une distance importante de la bobine émettrice comme cela est décrit dans ce document.

Le document US 9,690,005 décrit un détecteur de métaux qui comprend un disque de détection relié de manière filaire à une électronique de puissance et à une électronique de traitement qui est disposée dans un logement situé dans la canne du détecteur de métaux. Ce document associe l'électronique de traitement à un émetteur/récepteur sans fil qui est configuré pour communiquer avec un casque audio équipé d'un émetteur/récepteur sans fil compatible. Ici, la batterie est positionnée dans la canne, toutefois, la perte de rendement due à la résistance du câble d'excitation de la bobine persiste.

L'invention vise à pallier l'ensemble de ces inconvénients.

### [Exposé de l'invention]

L'invention vise à fournir un détecteur de métaux dont la capacité de détection est améliorée tout en limitant les pertes de rendement d'alimentation de la bobine électromagnétique.

Dans cette optique, l'invention se rapporte à un détecteur de métaux portatif comprenant :
- un disque de détection qui comporte une ou des bobines configurées pour émettre et recevoir un champ électromagnétique,
- des moyens de préhension configurés pour permettre une préhension du détecteur de métaux,
- une canne comportant une première extrémité qui porte le disque de détection et une seconde extrémité opposée de la première extrémité, la seconde extrémité étant couplée aux moyens de préhension du détecteur de métaux,
- une batterie qui est configurée pour délivrer un courant de batterie présentant une tension de valeur déterminée,
- un convertisseur de puissance qui est relié électriquement à la batterie, ce convertisseur de puissance est configuré pour produire un courant électrique continu dont la valeur de tension est modifiée par rapport à la valeur de tension du courant aux bornes de la de batterie, le convertisseur de puissance alimentant directement ou indirectement la ou des premières bobines,
- une unité de contrôle comprenant un émetteur/récepteur et un module de traitement du signal capté par la ou les bobines,
- un boitier de commande comprenant, d'une part, une interface homme-machine et un émetteur/récepteur configuré pour dialoguer avec l'émetteur/récepteur de l'unité de contrôle,
afin que le convertisseur de puissance ne perturbe pas les signaux électriques captés par la ou les bobines, le convertisseur de puissance est déporté au moins à une distance minimale déterminée d à tous points de la ou des bobines.

L'ajout d'un convertisseur de puissance dans le circuit d'alimentation de la ou des bobines émettrices permet d'ajuster la tension du courant continu délivré par la batterie. En particulier, le convertisseur de puissance permet d'augmenter, la tension du courant continu fourni par la batterie en vue d'alimenter la ou les bobines émettrices. Une élévation de la tension permet par exemple d'augmenter la puissance du champ électromagnétique. L'augmentation de la puissance du champ électromagnétique augmente les capacités de détection du détecteur de métaux. A l'inverse, dans certaines situations il peut être utile de réduire la puissance du champ magnétique. Dans ce cas, le convertisseur de puissance abaisse la valeur de tension du courant continu fourni par la batterie pour alimenter la ou les bobines émettrices. Par ailleurs, le déport du convertisseur de puissance d'une distance minimale d par rapport à tous les points de la ou des bobines permet d'éviter que les fréquences de travail du convertisseur de puissance ne perturbent la fonction de réception de la ou des bobines, c'est-à-dire, les signaux captés par la ou les bobines qui correspondent à des perturbations électriques du champ électromagnétique émis par la ou les bobines en fonction émetteur. Les perturbations électriques sont généralement produites par des corps métalliques.

En effet, la ou les bobines en mode récepteur présentent une sensibilité fine à des perturbations de l'ordre de quelques nanovolts de bruit en entrée. Cette sensibilité permet d'améliorer la détection mais rend la ou les bobines en mode réceptrice plus sensibles aux perturbations. De plus, l'utilisation d'un convertisseur de puissance permet notamment d'élever la tension en conservant une batterie de dimensions compactes qui peut être embarquée aisément dans la structure tubulaire de la canne ou dans le disque de détection. En effet, utiliser une batterie composée de plusieurs éléments en série nécessiterait de plus un moyen compliqué de recharge et équilibrage des éléments.

Dans la suite du document, « capter un signal » signifie que la ou les bobines en mode réceptrice captent, le champ électromagnétique environnant du disque pour le convertir en tension électrique. Ce champ électromagnétique comprend tous les champs magnétiques présents dans l'environnement et notamment celui généré par la ou les bobines en mode émettrice, ainsi que les perturbations que créent les corps métalliques qui se trouvent enfouis dans le substrat/sol où sont menées les recherches.

Dans la suite de ce document, la bobine émettrice désigne une bobine qui fonctionne uniquement en émission ou bien une bobine qui se trouve en mode émission de manière transitoire. De la même façon, la bobine réceptrice désigne une bobine qui fonctionne uniquement en réception ou bien une bobine qui se trouve en mode réception de manière transitoire.

### Batterie et convertisseur de puissance

Dans des modes de réalisation, la batterie peut également être déportée au moins à une distance minimale déterminée d à tous points de la ou des bobines. Le déport de la batterie permet de limiter les perturbations du signal du champ électromagnétique capté par la ou les bobines réceptrices. En effet, la masse de métal de la batterie produit des perturbations du champ électromagnétique capté par la ou les bobines réceptrices lorsque la batterie se trouve à proximité de la ou des bobines réceptrices. De plus, le fait de déporter la batterie peut permettre d'équiper le détecteur de métaux d'une batterie de grande capacité. Alors qu'une telle batterie à proximité de la ou des bobines réceptrices poserait des problèmes liés à son encombrement et des perturbations du signal qu'elle produit.

Dans des modes de réalisation, le disque de détection peut être orientable selon au moins une direction par rapport à la canne, le convertisseur de puissance étant déporté au moins à une distance minimale déterminée d à tous points de la ou des bobines quelle que soit l'orientation du disque de détection par rapport à la canne. Cela permet d'éviter de perturber le signal capté par la ou les bobines réceptrices quelle que soit l'orientation du disque de détection. A noter que l'articulation entre le disque de détection et le bas de la canne peut comprendre un seul axe, par exemple une articulation à bascule, ou comprendre plusieurs axes comme une rotule.

Dans des modes de réalisation, la batterie et le convertisseur de puissance peuvent être disposées au moins à la distance minimale d qui est supérieure ou égale 10 cm, de préférence, la distance minimale d est supérieure ou égale à 15 cm. Un tel écartement permet de ne pas générer de perturbations électromagnétiques à proximité de la ou des bobines réceptrices et ainsi de ne pas bruiter dans le signal capté.

Dans des modes de réalisation, dans lequel, la batterie et le convertisseur de puissance peuvent être disposés dans un logement qui est monté au moins à la distance minimale déterminée d sur ou dans la canne du détecteur de métaux. Un tel agencement permet de trouver un compromis entre l'augmentation de la puissance de détection et la limitation des perturbations du signal capté par la ou les bobines réceptrices.

Dans un mode de réalisation alternatif, la batterie et le convertisseur de puissance peuvent être disposés dans un logement qui est couplé au boitier de commande, un câble électrique reliant le convertisseur de puissance à la ou les bobines qui se trouvent dans le disque de détection. Ce mode de réalisation permet d'augmenter la puissance de travail de la bobine émettrice en conservant une structure mécanique classique du détecteur de métaux.

Dans des modes de réalisation, l'unité de contrôle peut également être déportée, par exemple, l'unité de contrôle peut être déportée du disque de détection. Selon une configuration particulière, l'unité de contrôle peut être intégrée dans le logement qui contient la batterie et le convertisseur de puissance.

Dans des modes de réalisation, l'unité de contrôle est configurée pour déterminer une consigne de tension que le convertisseur de puissance doit fournir à la ou aux bobines, l'unité de contrôle étant reliée électriquement au convertisseur de puissance. Cette caractéristique permet, au travers du boitier de commande communiquant avec l'unité de contrôle, à l'utilisateur de piloter un ajustement de la consigne de tension du courant électrique fournit par le convertisseur de puissance. L'intensité du champ électromagnétique peut être ajustée selon la complexité des sols.

Dans des modes de réalisation, le détecteur de métaux portatif peut comporter des moyens de filtrage disposés entre le convertisseur de puissance et la ou les bobines, les moyens de filtrage sont configurés pour fournir un courant électrique continu dont la tension est linéaire et régulée. Les moyens de filtrage permettent de lisser la tension qui alimente la bobine émettrice et ainsi d'améliorer la qualité du champ électromagnétique émis par la bobine émettrice. Selon un mode de réalisation particulier, les moyens de filtrage peuvent être passifs, par exemple, de type inductif, capacitif ou résistif ou une combinaison des trois.

Dans des modes de réalisation, le détecteur de métaux portatif peut comporter un pilote de tension configuré pour déterminer la consigne de la tension du courant d'alimentation produite par le convertisseur de puissance. Le pilote de tension permet de moduler la consigne de tension appliquée aux bornes de la ou des bobines et ainsi de faire varier la puissance de détection. Cela peut être utile pour adapter l'intensité du champ électromagnétique émis par la bobine en fonction de la complexité du substrat dans lequel l'utilisateur recherche des cibles métalliques. Selon un mode de réalisation particulier, le pilote de tension peut être un potentiomètre numérique qui est commandé par une consigne numérique provenant d'une unité de contrôle dédiée, de l'unité de contrôle du boitier de commande ou bien de l'unité de contrôle présente dans le disque de détection.

Dans des modes de réalisation, le convertisseur de puissance peut comprendre un élévateur de tension et/ou un abaisseur de tension. Pour augmenter la puissance de détection, il est utile d'augmenter la tension du courant d'alimentation des moyens d'excitation. Toutefois, il peut également être utile de réduire la puissance de détection lorsque le substrat de détection présente un ou des effets de sol conséquents, tels que l'effet magnétique présent dans des sols minéralisés, ou bien l'effet conducteur observable dans l'eau salée par exemple. Les propriétés électriques du sol peuvent varier en fonction de sa composition minérale, de son humidité et d'autres facteurs. Ces variations peuvent influencer la façon dont les signaux électromagnétiques sont transmis et reçus par le détecteur de métaux, ce qui peut affecter la précision de la détection. Par ailleurs, on entend par minéralisation des sols ou du substrat, des sols ou substrats qui sont chargés en minéraux et qui peuvent affecter la détection des objets métalliques. En effet, certains minéraux, tels que le fer, la magnétite, vont réagir à l'excitation magnétique en produisant à leur tour un champ magnétique venant éblouir le récepteur du détecteur de métaux ce qui complexifie la détection des cibles métalliques.

Ainsi dans le cas d'un effet de sol qui peut se produire dans un sol ou substrat minéralisé, l'intensité du champ renvoyée par ce substrat peut conduire à la saturation de la chaine d'amplification et filtration, empêchant toutes détections. L'abaisseur de tension permet ainsi d'ajuster la tension vers une valeur plus faible afin de sortir de cet état saturé de la chaine d'amplification. Dans un autre cas d'utilisation, abaisser la tension peut permettre aussi d'augmenter l'autonomie de la batterie qui alimente la ou les premières bobines. A l'inverse, élever la tension peut permettre d'augmenter la portée de détection. De plus, l'élévation de la tension et donc l'augmentation de l'intensité du champ électromagnétique de recherche, permet d'augmenter la force du signal reçu par les cibles métalliques et ainsi améliore l'immunité aux perturbations électromagnétiques extérieures.

Dans un mode de réalisation préférentiel, le convertisseur de puissance peut comprendre un élévateur de tension et un abaisseur de tension ou bien une combinaison des deux. La puissance du détecteur de métaux peut ainsi être ajustée en fonction de la complexité du substrat dans lequel sont menées les recherches.

Dans des modes de réalisation, le détecteur de métaux portatif peut comporter un cordon de déport qui relie, directement ou indirectement, le convertisseur de puissance à la ou les bobines.

### Moyens d'excitation-circuit de puissance

Dans des modes de réalisation, le détecteur de métaux portatif peut comporter des moyens d'excitation électriques qui sont reliés directement ou indirectement au convertisseur de puissance et qui sont configurés pour transformer le courant continu fourni par le convertisseur de puissance en courant alternatif pour alimenter les bornes de la ou des bobines. En particulier, les moyens d'excitation sont disposés dans le disque de détection à proximité de la ou des bobines. Les moyens d'excitation s'intègrent au circuit de puissance qui est configuré pour exciter la ou les bobines émettrices.

Dans des modes de réalisation, les moyens d'excitation sont disposés à une distance L des bornes de la ou des bobines, de préférence, la distance L est inférieure ou égale au diamètre disque de détection, en particulier, la distance L est inférieure ou égale à 30 cm, et de préférence, la distance L est inférieure ou égale à 10 cm. Pour améliorer l'efficacité d'excitation de la ou des bobines émettrices, et limiter les pertes par effet Joule, les moyens d'excitation sont agencés au plus près des bornes de la ou des bobines émettrices. En effet, la faible longueur de conducteur entre les moyens d'excitation et la ou les bobines émettrices, permet de réduire d'autant la valeur de la résistance série équivalente, et par conséquent les pertes par effet Joule dues aux forts courants échangés entre la bobine émettrice et les moyens d'excitation.

Dans des modes de réalisation, les moyens d'excitation peuvent comprendre un amplificateur à découpage comportant des transistors configurés pour convertir la tension d'excitation fixe en une tension alternative aux bornes de la ou des bobines émettrices, qui produit un courant variant alternativement au sein de la ou des bobines émettrices, induisant ainsi le champ électromagnétique de recherche. L'amplificateur à découpage peut être de type pont en H avec des transistors de puissance pilotés par l'unité de contrôle. Ces moyens d'excitation sont présents par exemple dans les détecteurs de métaux de type « Frequency Detector ».

Dans des modes de réalisation, les moyens d'excitation peuvent comporter un amplificateur linéaire couplé à un oscillateur qui permettent d'alimenter la ou les bobines selon un courant alternatif induisant un champ électromagnétique de détection. L'amplificateur linéaire présente l'avantage de ne pas créer de perturbations électromagnétiques visibles par la ou les bobines réceptrices. Ces moyens d'excitation sont présents par exemple dans les détecteurs de métaux dits à battement de fréquence ou « BFO Detector ».

Dans des modes de réalisation, les moyens d'excitation peuvent comporter une architecture de type générateur d'impulsion, pouvant être réalisée à base de transistor par exemple. Ces moyens d'excitation sont présents par exemple dans les détecteurs de métaux de type « Time Domain », comme les détecteurs de métaux à induction pulsée.

Dans des modes de réalisation, les moyens d'excitation peuvent comporter un ou des condensateurs de découplage qui sont configurés pour lisser la tension d'excitation en emmagasinant et en échangeant le courant électrique accumulé dans la ou les bobines à chaque inversion du courant d'excitation de la ou desdites bobines. Grâce à leur faible résistance série, les condensateurs de découplage permettent de réduire les pertes d'énergie électrique lors de l'alternance du courant d'excitation de la ou des bobines émettrices.

Dans des modes de réalisation, l'unité de contrôle est configurée, d'une part, pour, déterminer la composition fréquentielle du signal émis par la ou les bobines au travers du pilotage des moyens d'excitation et en particulier de la fréquence d'inversion du courant d'excitation, et d'autre part, de la tension d'alimentation que fournit le convertisseur de puissance aux moyens d'excitation.

### Electronique de traitement du signal

Dans des modes de réalisation, l'unité de contrôle peut comporter un module de traitement des signaux configuré pour démoduler, filtrer le signal analogique mesuré par l'organe de captation et détecter les variations du signal analogique. Le détecteur de métaux peut aussi comprendre une chaine d'amplification et de filtration des signaux mesurés et un convertisseur analogique/numérique configuré pour transformer les signaux mesurés de manière analogique en signaux numériques. Ces éléments font partie de l'électronique de traitement du signal analogique qui est mesuré par l'organe de captation.

Dans des modes de réalisation, le convertisseur analogique/numérique et la chaine d'amplification et de filtration sont disposés dans le disque de détection. L'intérêt de positionner la chaine de traitement analogique au plus proche de l'organe de captation est de limiter la captation de perturbations extérieures ou présentes dans le système du détecteur de métaux. Le signal une fois converti en signaux numériques, peut alors être transporté sans perte de qualité, vers les différents organes de traitement, détection, et aussi vers l'interface homme-machine (IHM).

Alternativement, une pré-amplification et un conditionnement du signal peuvent être réalisés au plus proche de l'organe de captation afin d'augmenter la robustesse du signal capté de façon à le transporter sans pertes jusqu'au reste de la chaine de traitement et de détection située à distance tel qu'un convertisseur analogique numérique ou des moyens traitements et de détection analogique.

Dans des modes de réalisation, le signal issu de l'organe de captation est conditionné puis traité de manière analogique sans utiliser de convertisseur analogique numérique. Ce mode de réalisation est utilisé par exemple dans les détecteurs de métaux d'ancienne génération ne comportant pas d'électronique numérique, tel que certains détecteurs de métaux à battement de fréquences, certains « Time Domain » ou certains « Frequency Detectors ».

### Bobines

Dans des modes de réalisation, le disque de détection peut comporter au moins une première bobine émettrice configurée pour émettre un champ magnétique et au moins deuxième bobine configurée pour capter des perturbations électriques dudit champ électromagnétique.

Dans des modes de réalisation, le disque de détection peut comporter des bobines qui se croisent et se superposent au moins en partie, dans le disque de détection. Cette configuration permet d'annuler la composante du champ émise par la bobine émettrice par opposition des flux magnétiques au sein de la bobine réceptrice.

Dans des modes de réalisation, la ou les bobines comportent un mode émission et un mode de réception, la ou les bobines fonctionnant de manière alternée en mode émission et en mode réception. Cela peut être notamment le cas pour les détecteurs de métaux à induction pulsée.

### Communication entre le boitier commande et l'unité de contrôle et les accessoires

Dans des modes de réalisation, les émetteurs/récepteurs du boitier de commande et de l'unité de contrôle peuvent être de type sans fils. En particulier, les émetteurs/récepteurs sans fils peuvent fonctionner selon un protocole de communication radio, optique ou acoustique. De préférence, le protocole de communication entre l'unité de contrôle et le boitier de commande est de type radio.

Dans des modes de réalisation alternatifs, les émetteurs/récepteurs du boitier de commande et de l'unité de contrôle peuvent être filaires, un câble s'étendant entre le boitier de commande et l'unité de contrôle pour permettre aux émetteurs/récepteurs de dialoguer.

Dans des modes de réalisation, le détecteur de métaux peut comporter des accessoires d'interface homme-machine tels qu'un casque, les accessoires communicants avec le boitier de commande au travers d'un protocole de communication, de préférence, sans fil. En particulier, le protocole de communication entre les accessoires et le boitier de commande peut être différent du protocole de communication qui est établi entre le boitier de commande et l'unité de contrôle. Bien entendu, les accessoires et le boitier de commande intègrent respectivement un émetteur/récepteur qui peut être dédié à cette communication.

Dans d'autres modes de réalisation, le protocole de communication entre les accessoires et le boitier de commande peut être filaire et utiliser, par exemple, une connexion de type USB ou prise jack ou tous autres moyens de connexion avec le casque audio.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] est une représentation schématique d'un détecteur de métaux portatif conforme d'un mode de réalisation de l'invention.
[Fig. 2] est une représentation schématique d'une synoptique d'architecture des éléments électroniques qui composent un détecteur de métaux portatif conforme d'un mode de réalisation de l'invention.
Les [Fig. 3], [Fig. 4] et [Fig. 5] sont des représentations schématiques de détecteurs de métaux portatifs conformes de l'invention, qui exposent chacun un mode de réalisation distinct de l'invention.
[Fig. 6] est un synoptique des éléments qui composent le pack batterie d'un détecteur de métaux conforme d'un mode de réalisation de l'invention.
[Fig. 7] est un synoptique des éléments qui composent le circuit d'excitation de la première bobine d'un détecteur de métaux conforme d'un mode de réalisation de l'invention.
[Fig. 8] est un synoptique plus détaillé d'un mode de réalisation de la figure 7.

### [Description des modes de réalisation]

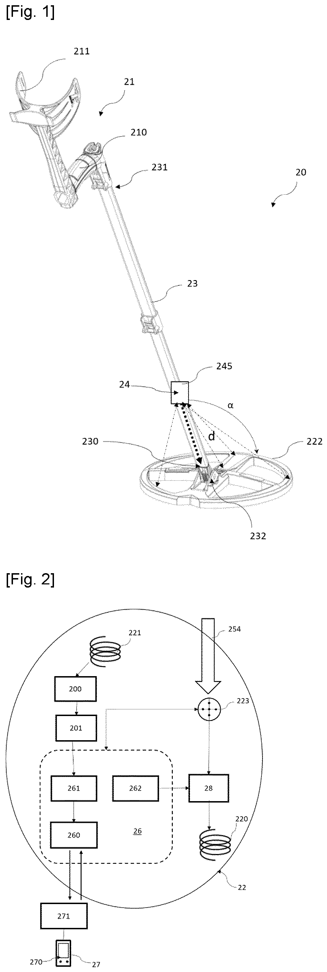

En référence aux figures 1 à 8, l'invention concerne un détecteur de métaux 20 portatif. Dans ce document, le terme portatif signifie que le détecteur de métaux est conçu pour être porté par l'utilisateur, par exemple, à l'aide d'une bandoulière qui est attachée au détecteur de métaux.

Pour en faciliter la préhension et la manipulation, le détecteur de métaux 20 comprend des moyens de préhension 21. L'utilisateur peut ainsi utiliser les moyens de préhension 21 pour orienter le détecteur de métaux en direction d'une cible qui se trouve généralement sur le sol. Selon le mode de réalisation illustré à la figure 1, les moyens de préhension comportent une poignée 210 surmontée d'une extension 211 configurée pour conférer un appui antébrachial. L'extension 211 apporte un confort d'utilisation à l'utilisateur.

Le détecteur de métaux 20 comporte un disque de détection 22 qui comporte au moins une première bobine 220 configurée pour émettre un champ électromagnétique.

Selon un mode de réalisation, le disque de détection peut aussi comporter au moins une deuxième bobine 221, dite bobine réceptrice, configurée pour capter le champ magnétique émis et des perturbations électriques dudit champ. Selon ce mode de réalisation, le détecteur de métaux peut être de type « Frequency détecter » encore appelé détecteur à battement de fréquence, c'est-à-dire, la première bobine 220 génère un champ électromagnétique continu et la bobine réceptrice 221 capte les variations du champ induit par la première bobine afin de détecter des cibles métalliques enfouies dans le sol. Selon ce mode de réalisation, la première bobine 220 émettrice et la deuxième bobine 221 réceptrice peuvent se croiser et se superposer dans le disque de détection 22.

L'invention concerne également les détecteurs de métaux à induction pulsée ou « Time domain detector » qui réalisent une analyse temporelle de la réponse impulsionnelle de l'environnement, par exemple du sol, pour détecter des cibles métalliques enfouies. Ce type de détecteur peut comprendre une première bobine et une bobine réceptrice, ou bien, une bobine remplissant alternativement une fonction émettrice et réceptrice. Selon ce mode de réalisation, la ou les bobines 220 qui fonctionnent en alternance en mode émission et en mode réception.

Dans le mode de réalisation illustré à la figure 2, le détecteur de métaux 20 comporte une bobine émettrice 220 et une bobine réceptrice 221. Dans cette synoptique, les bobines 220, 221 sont symbolisées par un enroulement hélicoïdal.

Comme illustré notamment à la figure 1, le disque de détection 22 comporte un élément 222 annulaire ou elliptique. Ici, l'élément 222 comprend une encoche qui s'insère dans la circonférence. Ici, la ou les bobines 220, 221 sont ménagées dans l'élément 222. L'élément 222 est relié au détecteur de métaux 20 par des branches 223 qui le couplent au bas d'une canne 23 du détecteur de métaux 20. En effet, le détecteur de métaux 20 comprend une canne 23 qui peut être télescopique et comprendre deux tronçons mobiles l'un par rapport à l'autre tel qu'illustré sur la figure 1. La canne 23 comporte une première extrémité 230, dite bas de canne, et une seconde extrémité 231, dite haut de canne, qui est opposée de la première extrémité 230.

Dans cet exemple, la première extrémité 230 qui porte le disque de détection 22 alors que la seconde extrémité est couplée à la poignée 210 du détecteur de métaux 20. Selon un mode de réalisation, le disque de détection 22 peut être orientable selon au moins une direction par rapport à la canne 23. En particulier, le détecteur de métaux 20 peut comprendre une articulation 232 pour coupler la première extrémité 230 au disque de détection 22. Cette articulation 232 permet d'orienter le disque de détection 22 au moins selon un angle α défini entre le plan du disque de détection 22 et l'axe longitudinal de la canne 23 tel qu'illustré à la figure 1. Lorsque le détecteur de métaux 20 est en configuration d'utilisation, l'angle α peut être compris entre 0 et 190 °. Lorsque le détecteur de métaux est à l'arrêt, le disque de détection 22 peut être replié contre la canne 23 pour gagner en compacité.

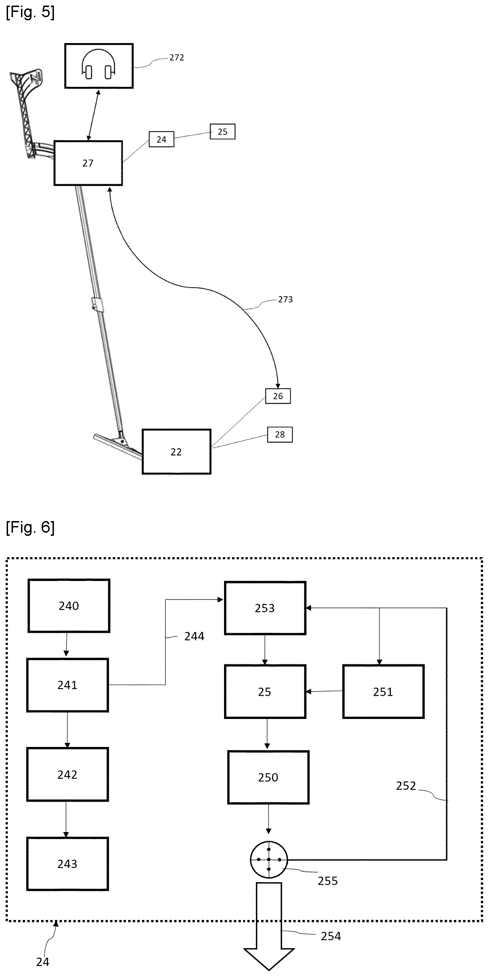

Selon un mode de réalisation, le détecteur de métaux 20 peut comporter un pack de batterie 24 tel que cela est notamment illustré à la figure 6. Le pack de batterie 24 comprend au moins une batterie 240 permettant d'alimenter la bobine émettrice 220 en courant électrique. La batterie 240 peut comprendre un ou plusieurs accumulateurs qui peuvent être montés en série ou en parallèle, ou en combinaison des deux modes. Le pack batterie 24 peut comprendre un circuit de protection avec, par exemple, des fonctionnalités de protection contre les courts-circuits, les surtensions. La batterie 240 configurée d'usine pour délivrer un courant de batterie 244 présentant une tension de valeur déterminée, qui peut, par exemple être comprise entre 3 et 13 volts. Typiquement, le courant de batterie 244 est un courant électrique continu. Dans le mode de réalisation de la figure 6, le pack batterie 24 comprend un connecteur 241 qui relie la batterie 24, directement ou indirectement, à la bobine émettrice 220. Le connecteur 241 est également connecté à un chargeur 242 qui peut être équipé d'un témoin de charge de type diode électroluminescente ou LED. Le pack batterie 24 comprend en outre un connecteur de recharge 243 qui est configuré pour être connecté à une source d'énergie électrique. Le connecteur 243 peut par exemple comprendre un connecteur mâle ou femelle de type USB- B ou USB- C. Le connecteur 243 peut également comprendre deux contacts apparent pôles positif et négatif, en liaison avec des contacts de type plot à ressort positionnés sur un cordon de recharge possédant à l'autre extrémité un connecteur standard de type USB-A compatible avec des alimentations secteur vers +5V.

Bien entendu, tout autre connecteur capable d'assurer un transfert de courant électrique peut être employé pour constituer le connecteur de recharge 243.

Selon l'invention, le détecteur de métaux 20 comprend un convertisseur de puissance 25 qui peut être intégré au pack batterie 24 selon certains modes de réalisation. Le convertisseur de puissance 25 est électriquement relié à la batterie 240, le convertisseur de puissance 25 est configuré pour produire un courant électrique dont la valeur de tension est modifiée par rapport à la valeur de tension du courant aux bornes de la batterie 244. Le convertisseur de puissance 25 alimente directement ou indirectement la bobine 220.

Selon un mode de réalisation préférentiel, le convertisseur de puissance est configuré pour fournir un courant électrique dont la tension est supérieure par rapport à la valeur de tension aux bornes de la batterie. Le convertisseur de puissance 25 peut être configuré, par exemple, pour doubler la tension du courant de batterie 244. Ainsi, lorsqu'une batterie délivre un courant de tension 5 Volts, le convertisseur de puissance 25 permet d'élever la tension du courant d'alimentation directe ou indirecte de la bobine 220 à une tension de 10 Volts.

Selon un mode de réalisation, le convertisseur de puissance 25 peut comprendre un élévateur de tension. Plus particulièrement, l'élévateur de tension peut être un hacheur qui peut comprendre plusieurs topologies possibles de type hacheur parallèle (ou « boost chopper »), ou bien un élévateur de tension à capacités commutées.

Selon un autre mode de réalisation, le convertisseur de puissance 25 peut comprendre un abaisseur de tension dans le cas où la tension aux bornes de la batterie est plus élevée que la tension à produire pour alimenter la puissance de la bobine émettrice. Selon ce mode de réalisation, le convertisseur de puissance 25 peut comprendre un hacheur de type hacheur série (ou « buck chopper ») en topologie « Forward » par exemple, ou encore des régulateurs linéaires de type LDO (« low dropout regulator »).

Selon un autre mode de réalisation, dans le cas où la tension en entrée du convertisseur de puissance 25 est inconnue ou évolutive, cette situation peut se produire notamment dans le cas d'une batterie qui se décharge, le convertisseur de puissance 25 peut combiner les deux modes abaisseur et élévateur de tension. A cet effet, le convertisseur de puissance 25 peut comprendre une topologie d'hacheur série-parallèle (« buck-boost chopper » ou « half bridge converter »), en topologie « flyback » par exemple.

La figure 6 illustre un mode de réalisation de l'invention dans lequel la batterie 240 est couplée à un convertisseur de puissance 25 pour fournir à la bobine 220 un courant d'alimentation dont la valeur de tension plus élevée. Selon un mode de réalisation, le convertisseur de puissance 25 peut comprendre un convertisseur de tension DC -DC, c'est-à-dire, un convertisseur configuré pour recevoir un courant continu, élever sa tension et restituer un courant continu de tension supérieure à la tension du courant qu'il reçoit. Bien entendu, le convertisseur de puissance 25 peut comprendre d'autres composants électroniques de type qui sont capables d'élever la valeur de tension d'un courant électrique.

Selon un mode de réalisation illustré à la figure 6, le détecteur de métaux 20 peut comporter des moyens de filtrage 250 disposés entre le convertisseur de puissance 25 et la bobine 220. Les moyens de filtrage 250 sont configurés pour fournir un courant électrique continu dont la valeur de tension est linéaire. Dans cet exemple, les moyens de filtrage 250 sont passifs, par exemple, de type inductif, capacitif ou résistif ou une combinaison des trois.

Selon un autre mode de réalisation, le détecteur de métaux 20 peut comporter un pilote de tension 251 configuré pour déterminer la consigne de la tension du courant d'alimentation produit par le convertisseur de puissance 25. Le pilote de tension 251 peut comprendre un potentiomètre contrôlé par une commande digitale ou analogique. En particulier, le potentiomètre agit de façon résistive sur la boucle de rétroaction de du convertisseur de puissance 25 en modifiant ainsi la tension de régulation.

Le pilote de tension 251 peut également comprendre un transistor, par exemple de type MOSFET ou Bipolaire, ou un contact mécanique/électronique. Le transistor est commandé digitalement ou linéairement pour ajuster un des paramètres de la rétroaction de régulation en courant ou en tension ou en fréquence du convertisseur de puissance 25.

Le pilote de tension 251 agit ainsi sur la modification du signal de hachage (fréquence, rapport cyclique, mélange harmonique complexe) du convertisseur de puissance 25 pour contrôler la consigne de tension.

Certains convertisseurs de puissance de type SoC (system on chip) peuvent embarquer un pilote de tension de leur valeur de consigne de façon analogique ou numérique.

Dans cet exemple, le pilote de tension 251 est connecté à une unité de contrôle 26. En effet, comme illustré à la figure 2, le détecteur de métaux 20 comprend une unité de contrôle 26 qui est configurée notamment pour déterminer la consigne de tension à fournir à la bobine 220. Dans l'exemple de la figure 6, des circuits de communication 252, notamment de type bus, relient l'unité de contrôle 26 au pilote de tension 251.

Selon l'invention, l'unité de contrôle 26 est pilotée par un boitier de commande 27 qui comprend une interface homme-machine 270 permettant à l'utilisateur du détecteur de métaux 20 de moduler la consigne de tension du convertisseur de puissance 25. L'interface homme-machine 270 peut être intégrée au boitier de commande 27 ou déportée dans un smartphone au travers d'une application dédiée.

Le fait d'ajuster la consigne en tension permet d'ajuster la puissance du champ magnétique émit par le détecteur de métaux afin de s'adapter à l'environnement de recherche de façon à conserver le meilleur rapport signal à bruit sans saturer la chaine de mesure. En effet, certains environnements comme les sols minéralisés, ou les sols pollués par des cibles non souhaitées de grande taille ou multiples, ces environnements vont réagir à l'excitation magnétique en renvoyant une plus importante quantité d'énergie vers l'organe de captation à des fréquences particulières qui viennent emplir le signal capté risquant la saturation des amplificateurs de la chaine de mesure produisant de fait des non-linéarités dans le signal. Ces non-linéarités du signal produisent du bruit et des fausses détections.

Dans le cas d'un terrain faiblement minéralisé, on peut vouloir augmenter le signal utile des cibles recherchées de façon à augmenter la profondeur de détection dans le sol ou bien de façon à couvrir les pollutions électromagnétiques environnantes, l'augmentation de la tension et donc du champ magnétique est alors souhaitable.

L'élévation de la tension et donc l'augmentation de l'intensité du champ électromagnétique de recherche, permet d'augmenter la force du signal reçu par les cibles métalliques et ainsi améliore l'immunité aux perturbations électromagnétiques extérieures, qui peut être souhaitable par exemple dans le cas d'une utilisation du détecteur de métaux dans un environnement pollué par des champs électromagnétiques issus de machines tournantes comme une pompe à chaleur, ou un onduleur de centrale photovoltaïque.

La possibilité d'ajuster la consigne de tension peut aussi permettre un démarrage en douceur du convertisseur de puissance 25 en augmentant progressivement la puissance du champ magnétique, de façon à préserver l'électronique de mal fonction ou de détériorations.

Enfin, l'ajustement de la consigne de tension peut permettre à l'utilisateur de choisir un compromis entre les avantages d'une puissance plus élevée et l'autonomie de la batterie. Dans certaines circonstances, l'utilisateur préférera économiser de l'énergie afin de prolonger la durée de recherche, l'abaissement de la consigne de tension du convertisseur de puissance 25 est alors souhaitable.

Selon un mode de réalisation illustré à la figure 6, le détecteur de métaux 20 peut comprendre un interrupteur 253 qui gère l'alimentation en courant de batterie 244 du convertisseur de puissance 25. L'interrupteur 253 est piloté par l'unité de contrôle 26 au travers de circuits de communication 252. Selon un mode de réalisation, l'interrupteur 253 peut être configuré pour passer le convertisseur de puissance en mode veille lorsque l'unité de contrôle 26 lui ordonne, par exemple, lorsque l'utilisateur souhaite arrêter momentanément la détection ou lorsque le détecteur de métaux 20 est éteint.

Selon un autre mode de réalisation, l'interrupteur 253 peut être configuré pour passer un mode veille lorsque le cordon de déport 254 qui relie le pack batterie 25 à l'unité de contrôle 26 est débranché de son connecteur d'interface 255. Ceci, que le débranchement du cordon de déport 254 soit volontaire ou involontaire. Le connecteur d'interface 255 relie au travers du cordon de déport 254, d'une part, les circuits de communication 252 à l'unité de contrôle, et d'autre part, le convertisseur de puissance 25 et la bobine 220. Le cordon de déport 254 peut être de type filaire avec un ou plusieurs conducteurs eux-mêmes composés d'un ou plusieurs brins. L'âme conductrice est isolée des autres conducteurs par une gaine isolante. Une gaine extérieure supplémentaire peut permettre de rassembler et protéger l'ensemble des conducteurs du cordon. Certains conducteurs peuvent être torsadés ou tressés entre eux, alors que d'autres conducteurs peuvent disposer d'un blindage électrique.

Selon ce mode de réalisation, le cordon de déport 254 relie électroniquement l'unité de contrôle 26 au convertisseur de puissance 25. Afin de moduler la consigne de tension du convertisseur de puissance 25, l'unité de contrôle 26 peut être configurée pour dialoguer avec le boitier de commande 27. A cet effet, l'unité de contrôle 26 comprend un premier émetteur/récepteur 260 qui est configuré pour dialoguer avec un second émetteur/récepteur 271 embarqué dans le boitier de commande 27. Ce canal de communication permet également de transférer les données relatives au signal analogique capté par la bobine réception 221.

Selon un mode de réalisation, l'unité de contrôle 26 comprend un module de traitement 261 du signal capté par l'organe de captation. Le module de traitement du signal 261 est adapté selon la configuration des bobines 220, 221 et le type de détecteur de métaux 20 comme cela est décrit précédemment. Le module de traitement 261 est configuré pour démoduler, filtrer le signal et détecter les variations du signal.

Selon un mode de réalisation, le module de traitement 261 peut être réalisé de manière analogique. Le module de traitement 261 comprend, dans ce cas, des moyens de filtrage et de détection sous forme de circuits électroniques analogiques par exemples des redresseurs, comparateurs, filtres et des circuits logiques par exemple des portes logiques, des bascules.

Selon un autre mode de réalisation, le module de traitement 261 peut être réalisé numériquement. Dans ce cas, le module de traitement 261 peut être intégré à l'unité de contrôle 26 ou comprendre un circuit dédié qui peut être de type microcontrôleur, microprocesseur, PSD (processeur de signal numérique), ou circuit logique programmable (ex : FPGA).

Selon le mode de réalisation illustré à la figure 2, le détecteur de métaux 20 peut comporter une chaine d'amplification et de filtration 200 des signaux analogiques captés par la ou les bobines réceptrices. La chaine d'amplification et de filtration 200 reçoit les signaux analogiques captés par la ou les bobines réceptrices, amplifie les signaux, réalise un premier filtre du bruit des signaux puis les transmet vers le module de traitement 261 de l'unité de contrôle 26. Par exemple, la chaine d'amplification et de filtration 200 peut comprendre des filtres passifs composés d'éléments inductifs, résistifs, capacitifs. La chaine d'amplification et de filtration 200 peut également comprendre des amplificateurs faibles bruits ou non, avec un gain fixe ou variable, et une bande passante restreinte au signal utile. La chaine d'amplification et de filtration 200 peut comprendre d'autres composants tels que des cellules de filtrage actif réalisant des ordres élevés, des amplifications à faible bruit, des moyens de pilotage de gains et de bandes passantes.

Selon un autre mode de réalisation, le détecteur de métaux 20 peut comprendre un convertisseur analogique/numérique 201 configuré pour transformer les signaux analogiques captés par la ou les bobines réceptrices en signaux numériques. Le convertisseur analogique/numérique 201 peut être intercalé entre la chaine d'amplification et de filtration 200 et le module de traitement 261 tel que cela est illustré à la figure 2.

Selon le mode de réalisation de la figure 2, le convertisseur analogique/numérique 201 et la chaine d'amplification et de filtrage 200 sont disposés dans le disque de détection 22. Toutefois, selon un mode de réalisation alternatif, le signal capté par la ou les bobines réceptrices peut être relayé vers un terminal, distant du disque de détection 22, qui peut comprendre la chaine d'amplification et de filtration 200, le convertisseur analogique numérique 201, et le module de traitement 261. Ce terminal distant peut être constitué par le boitier commande 27. Dans ce mode de réalisation particulier, un premier conditionnent des signaux est réalisé afin de les robustifier pour leur transport, vers un terminal distant. Le premier conditionnement peut comprendre un étage d'amplification et filtrage, et pour permettre leur transport via une liaison conduite électrique : une conversion des signaux en différentiel, pour une meilleure immunité au perturbations extérieures. Ou alternativement pour permettre le transport des signaux via une liaison conduite électrique, radio, optique ou sonore : une transposition des signaux à des fréquences porteuses par une modulation.

Les inventeurs se sont aperçus que l'ajout du convertisseur de puissance 25 est une source de perturbations du signal capté, en effet, le convertisseur de puissance 25 comprend généralement un convertisseur dont l'horloge de hachage et la fréquence de travail génèrent des harmoniques qui sont très difficiles à filtrer si le convertisseur de puissance 25 est disposé à proximité directe de la ou des bobines réceptrices et dans une moindre mesure à proximité de la chaine d'amplification et de filtration 200 et du convertisseur numérique 201. Ces éléments sont très sensibles aux champs électromagnétiques et le convertisseur de puissance 25 génère du bruit sur une large bande de fréquence qui est difficile à filtrer.

C'est pourquoi, conformément à l'invention, le convertisseur de puissance 25 est déporté au moins à une distance minimale déterminée d à tous points de la ou des bobines réceptrices. De préférence et tel qu'illustré à la figure 1, le pack batterie 24, qui intègre le convertisseur de puissance 25 et la batterie 241, est disposé au moins à une distance minimale déterminée d à tous points de la ou des bobines réceptrices.

Selon le mode de réalisation, dans lequel, le disque de détection 22 est orientable par rapport à la canne 23 selon au moins une direction, le convertisseur de puissance 25 et de préférence, également la batterie 241, sont déportés au moins à une distance minimale déterminée d à tous les points de la ou des bobines réceptrices quelle que soit l'orientation du disque de détection 22 par rapport à la canne 23. La distance minimale d est déterminée afin que quelle que soit l'orientation du disque détection les perturbations produites notamment par le convertisseur de puissance 25 soit suffisamment éloignées, en particulier, de la ou des bobines réceptrices pour ne pas bruiter le signal capté.

Selon un mode de réalisation, le convertisseur de puissance 25 est disposée à au moins une distance minimale d supérieure ou égale 10 cm à tous points de la ou des bobines réceptrices, de préférence, la distance minimale d est supérieure ou égale à 15 cm. En pratique, la batterie 241 peut également être disposée au moins à cette distance minimale lorsque notamment, selon un mode de réalisation, le convertisseur de puissance 25 est disposé dans le pack batterie 24.

Selon un mode de réalisation, le détecteur de métaux 20 comporte des moyens d'excitation 28 électriques qui sont configurés pour exciter la bobine émettrice 220. Les moyens d'excitation 28 sont reliés directement ou indirectement au convertisseur de puissance 25. En particulier, dans l'exemple de la figure 2, les moyens d'excitation 28 sont reliés au convertisseur de puissance 25 au travers du cordon de déport 254 qui relie le connecteur d'interface 255 du pack batterie 24 au connecteur d'interface 223 du disque de détection 22. Selon ce mode de réalisation, l'unité de contrôle 26 peut comprendre un pilote de signal 262 qui est configuré pour actionner les moyens d'excitation 28 de sorte à émettre un champ électromagnétique déterminé par le boitier de commande 27. Selon un mode de réalisation, l'utilisateur peut modifier le champ électromagnétique émis par la bobine 220 au travers de l'interface homme-machine 270 du boitier de commande 27.

Selon un mode de réalisation préférentiel, les moyens d'excitation 28 sont disposés à une distance L des bornes de la bobine émettrice 220, de préférence, la distance L peut être inférieure ou égale au diamètre disque de détection 22. En particulier, la distance L peut être inférieure ou égale à 30 cm, et de préférence, la distance L est inférieure ou égale à 10 cm.

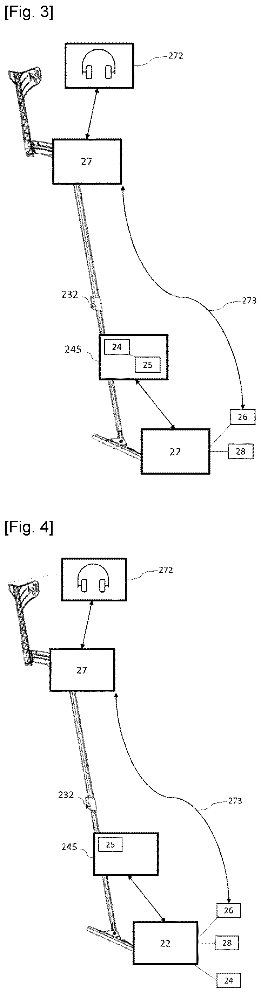

Selon un mode de réalisation illustré notamment aux figures 2 et 3, les moyens d'excitation 28 sont disposés dans le disque de détection 22 à la distance L qui est proximale de la ou des bobines émettrices 220. Selon le mode de réalisation préférentiel de la figure 3, la batterie 241 et le convertisseur de puissance 25 sont disposés dans un logement 245 qui est monté au moins à la distance minimale déterminée d dans la canne 23 du détecteur de métaux 20. Alternativement, le logement 245 peut être disposé sur la canne 23 de manière saillante et solidaire de cette dernière. Ce mode de réalisation est illustré à la figure 3, dans laquelle, la position du logement 245 est situé dans le bas de la canne 23 en dessous de la jonction 232 entre les deux bras de la canne 23. Selon cette configuration, le cordon de déport 254 schématisé à la figure 6 relie le convertisseur de puissance 25 à la bobine 220 et à l'unité de contre 26 tel que cela est précédemment décrit.

Le cordon de déport 254 peut être disposé dans la tubulure du bas de canne 23 ou encore s'étendre à l'extérieur de la canne 23 entre le convertisseur de puissance 25 et le connecteur d'interface 223 du disque de détection 22. Le cordon de déport 254 peut être droit ou enroulé en spirale. Selon le mode de réalisation de la figure 2, le connecteur d'interface 223 relie notamment le convertisseur de puissance 25 à la bobine 220 au travers des moyens d'excitation 28.

Selon un mode de réalisation alternatif illustré à la figure 4, les moyens d'excitation 28 électrique et le pack batterie 24 sont disposés dans le disque de détection 22 alors que le convertisseur de puissance 25 se trouve à au moins une distance d minimale à tous points de la ou des bobines réceptrices. Selon un autre mode de réalisation alternatif illustré à la figure 5, les moyens d'excitation 28 sont disposés dans le disque de détection 22 à proximité de la ou des bobines émettrices 220. Le pack batterie 24 qui comprend également le convertisseur de puissance 25 est quant à lui disposé dans un logement au niveau du boitier de commande 27 qui est disposé au niveau de la seconde extrémité 231 de la canne 23. Le cordon de déport 254 relie alors le convertisseur de puissance 25 aux moyens d'excitation 28 qui se situent dans le disque de détection 22.

Alternativement, les moyens d'excitation 28 peuvent être disposés dans le logement 245, néanmoins une telle configuration nécessite l'emploi d'un connecteur pour les relier aux bornes de la ou des bobines 220 et ce connecteur produit une perte de rendement préjudiciable. A l'inverse, lorsque les moyens d'excitation 28 sont disposés dans le disque de détection 22, il est possible de les souder au même circuit électronique que les bornes de la ou des bobines.

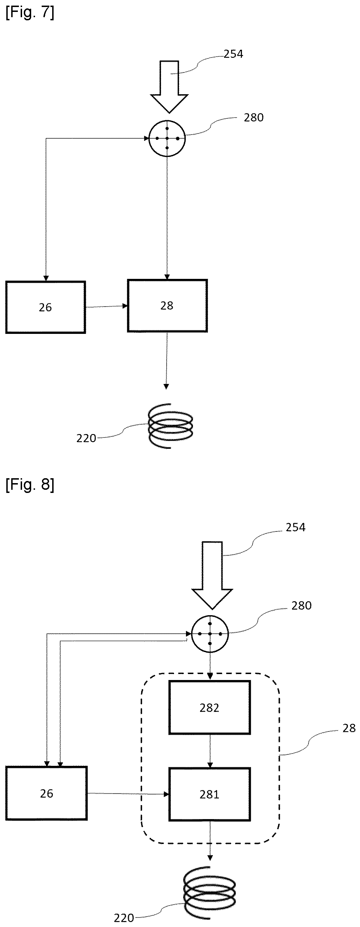

Selon le mode de réalisation illustré à la figure 7, le cordon de déport 254 transmet le courant d'alimentation produit par le convertisseur de puissance 25 aux moyens d'excitation 28 qui sont pilotés par l'unité de contrôle 26. Les moyens d'excitation 28 correspondent à un convertisseur de puissance configuré pour convertir le courant d'alimentation continu fournit par le convertisseur de puissance 25 en courant alternatif pour exciter la ou les bobines émettrices 220 et induire un champ électromagnétique de recherche. L'unité de contrôle 26 peut agir sur l'intensité et/ou sur la composition fréquentielle et la répartition d'énergie dans le spectre du champ électromagnétique induit par la ou les bobines 220. Comme cela est décrit précédemment, l'unité de contrôle 26 peut également ajuster la tension du courant d'alimentation fournit par le convertisseur de puissance 25 au travers du cordon de déport 254 et des circuits de communication 252 qui lui permettent d'agir sur le pilote de tension 251.

La figure 8 décrit un mode de réalisation particulier des moyens d'excitation 28. Selon ce mode de réalisation, les moyens d'excitation 28 comportent un amplificateur 281 qui est configuré pour exciter, à partir du courant d'alimentation qui provient de cordon de déport 254, la ou les bobines émettrices 220 selon un courant alternatif décrit par des signaux d'excitation ordonnés par l'unité de contrôle 26. L'amplificateur 281 est directement relié à la ou les bobines émettrices 220.

L'amplificateur 281 peut être de plusieurs types. Selon un mode de réalisation, l'amplificateur 281 est de type amplificateur à découpage qui est un convertisseur de puissance hacheur de type onduleur. L'amplificateur à découpage comprenant des transistors configurés pour découper la tension d'alimentation de façon à alimenter la ou les bobines émettrices 220 selon un courant alternatif d'excitation induisant le champ électromagnétique de détection. L'amplificateur à découpage peut être réalisé par un pont complet en H, un demi-pont, ou un convertisseur multiniveau.

Selon un mode de réalisation alternatif, l'amplificateur 281 est de type amplificateur linéaire piloté par un signal analogique ou bien couplé à un oscillateur pour produire un signal d'excitation à la fréquence d'auto-accord (résonnance propre) de la bobine émettrice 220. Cette association permet d'alimenter la ou les bobines 220, par exemple, dans le cadre d'un détecteur de métaux à battement de fréquence.

Selon le mode de réalisation illustré à la figure 8, les moyens d'excitation 28 comportent un condensateur de découplage 282. Dans cet exemple, le condensateur de découplage 282 est intercalé entre l'amplificateur 281 et le connecteur 280. Le condensateur de découplage 282 est configuré pour lisser tension d'alimentation en emmagasinant et en échangeant le courant électrique accumulé dans la ou les bobines 220 à chaque inversion du courant d'excitation de la ou des bobines 220. La fréquence d'inversion du courant d'excitation de la ou les bobines émettrice 220 est pilotée par l'unité de contrôle 26 et peut être comprise entre 1 kHz et 200kHz.

Les figures 3 à 5 illustrent différents modes de réalisation d'organisations des composants que comprend le détecteur de métaux 20. Dans ces modes de réalisation, l'unité de contrôle 26 est disposée soit dans le disque de détection 22. Toutefois, il est également possible de disposer l'unité contrôle 26 soit dans le boitier de commande 27 qui est disposée de la seconde extrémité 231 de la canne 23 ou encore dans le logement 245 qui comprend le pack batterie 24. Ainsi, selon un mode de réalisation, l'unité de contrôle 26 peut être disposée au moins à la distance d déterminée de la ou des bobines réceptrices .

Lorsque l'unité de contrôle 26 est déportée par rapport au convertisseur de puissance 25, le cordon de déport 254 permet de relier ces deux composants entre eux. Le cordon de déport 254 relie également le convertisseur de puissance 25 aux moyens d'excitation 28 lorsque ces deux composants sont déportés l'un par rapport à l'autre. Enfin selon un mode de réalisation, où les moyens d'excitation 28 sont déportés par rapport au disque de détection 22 et donc par rapport à la ou les bobines émettrice 220, le détecteur de métaux peut comprendre un autre cordon pour transmettre le courant alternatif d'excitation des bornes de la ou des bobines 220.

Selon un mode de réalisation préférentiel, l'émetteur/récepteur 271 du boitier de commande 27 et l'émetteur récepteur 260 de l'unité de contrôle 26 sont sans fils et configurés pour dialoguer entre eux selon un protocole de communication 273 déterminé. Au moins trois alternatives existent s'agissant du type de protocole de communication 273 sans fil, le protocole de communication sans fil peut être de type radio, optique ou acoustique.

Selon un autre mode de réalisation, le émetteur/récepteur 271 du boitier de commande 27 et l'émetteur/récepteur 260 de l'unité de contrôle 26 sont de type filaire. Selon cette configuration un câble s'étendant entre le boitier de commande 27 et l'unité de contrôle 26 pour permettre aux émetteurs/récepteurs de dialoguer. Selon les figures 3 à 5, le protocole de communication 273 peut être constitué par un fil qui peut courir le long de la canne 23 ou être intégré à l'intérieur de la canne 23.

Il est à noter que le boitier de commande 27 peut être associé à un casque 272 tel que cela est illustré aux figures 3 à 5 mais aussi à d'autres accessoires de type tablette, smartphone etc. La communication entre le boitier 27 et le casque 272 ou les autres accessoires peut être filaire ou sans fil selon un protocole de communication de champ proche tel qu'un protocole radio spécifique, Bluetooth, wifi etc.

La figure 3 illustre un mode de réalisation préférentiel, dans lequel, l'unité de contrôle 26 et les moyens d'excitation se trouvent dans le disque de détection 22 alors que la batterie 241 et le convertisseur de puissance 25 sont disposés à une distance d de la ou les bobines réceptrices. En particulier, le convertisseur de puissance 25 et la batterie 241 sont disposés dans un logement 245 qui est situé dans ou sur la canne 23 à la distance d minimale de la ou des bobines réceptrices. Selon ce mode de réalisation préférentiel, l'unité de contrôle 26 communique avec le boitier de commande 27 selon un protocole de communication 273 de type sans fil et notamment de type radio. Les accessoires tels que le casque 272 sont quant à eux reliés de préférence sans fil aux boitiers de commande 27 selon un protocole de communication qui peut être différent de celui qui est utilisé entre l'unité de contrôle 26 et le boitier de commande 27.

## Revendications

1. Détecteur de métaux (20) portatif comprenant :
- un disque de détection (22) qui comporte une ou des bobines (220, 221) configurées pour émettre et recevoir un champ électromagnétique,
- des moyens de préhension (21) configurés pour permettre une préhension du détecteur de métaux (20),
- une canne (23) comportant une première extrémité (230) qui porte le disque de détection (22) et une seconde extrémité (231) opposée de la première extrémité (230), la seconde extrémité (231) étant couplée aux moyens de préhension (21) du détecteur de métaux (20),
- une batterie (241) qui est configurée pour délivrer un courant de batterie présentant une tension de valeur déterminée,
- un convertisseur de puissance (25) qui est relié électriquement à la batterie (241), le convertisseur de puissance (25) est configuré pour produire un courant électrique continu dont la valeur de tension est modifiée par rapport à la valeur de tension du courant aux bornes de la batterie, le convertisseur de puissance (25) alimentant directement ou indirectement la ou les premières bobines (220),
- une unité de contrôle (26) comprenant un émetteur/récepteur (260) et un module de traitement du signal (261) capté par la ou les bobines (220, 221),
- un boitier de commande (27) comprenant, d'une part, une interface homme-machine (270) et un émetteur/récepteur (271) configuré pour dialoguer avec l'émetteur/récepteur (260) de l'unité de contrôle (26),
afin que le convertisseur de puissance (25) ne perturbe pas les signaux électriques captés par la ou les bobines (220, 221), le convertisseur de puissance (25) est déporté au moins à une distance minimale déterminée d à tous points de la ou des bobines (220, 221).

2. Détecteur de métaux (20) portatif selon la revendication 1, dans lequel, la batterie (241) est déportée au moins à une distance minimale déterminée d à tous points de la ou des bobines (220, 221), en particulier, la batterie et le convertisseur de puissance sont disposés au moins à une distance minimale d qui est supérieure ou égale 10 cm, de préférence, la distance minimale d est supérieure ou égale à 15 cm.

3. Détecteur de métaux (20) portatif selon la revendication 2, dans lequel, la batterie (241) et le convertisseur de puissance (25) sont disposés dans un logement (245) qui est monté au moins à la distance minimale d sur ou dans la canne (23) du détecteur de métaux (20).

4. Détecteur de métaux (20) portatif selon l'une des revendications 1 et 2, dans lequel, la batterie (241) et le convertisseur de puissance (25) sont disposés dans un logement qui est couplé au boitier de commande (27), un câble électrique reliant le convertisseur de puissance (25) à la ou les bobines (220, 221) qui se trouvent dans le disque de détection (22).

5. Détecteur de métaux (20) portatif selon l'une des revendications 1 à 4, dans lequel, le disque de détection (22) étant orientable selon au moins une direction par rapport à la canne (23), le convertisseur de puissance (25) étant déporté au moins à une distance minimale déterminée d à tous points de l'organe de captation quelle que soit l'orientation du disque de détection (22) par rapport à la canne (23), de préférence, l'unité de contrôle (26) est déportée du disque de détection (22), de préférence, l'unité de contrôle (26) est déportée dans le logement (244).

6. Détecteur de métaux (20) portatif selon l'une des revendications 1 à 5, dans lequel, l'unité de contrôle (26) est configurée pour déterminer une consigne de tension que le convertisseur de puissance (25) doit fournir à la ou aux bobines (220, 221), l'unité de contrôle (26) étant reliée électriquement au convertisseur de puissance (25).

7. Détecteur de métaux (20) portatif selon l'une des revendications 1 à 6, qui comporte, des moyens de filtrage (250) disposés entre le convertisseur de puissance (25) et la ou les bobines (220, 221), les moyens de filtrage (250) sont configurés pour fournir un courant électrique continu dont la tension est linéaire et régulée.

8. Détecteur de métaux (20) portatif selon l'une des revendications 1 à 7, qui comporte, un pilote de tension (251) configuré pour déterminer la consigne de la tension du courant d'alimentation produit par le convertisseur de puissance (25), le pilote de tension (251) étant connecté au convertisseur de puissance (25).

9. Détecteur de métaux (20) portatif, selon l'une des revendications 1 à 8, qui comporte, un cordon de déport (254) qui relie, directement ou indirectement, le convertisseur de puissance (25) et la ou les bobines (220, 221).

10. Détecteur de métaux (20) portatif, selon l'une des revendications 1 à 9, dans lequel, le convertisseur de puissance (25) comprend un élévateur de tension et/ou un abaisseur de tension ou un système combinant les deux capacités.

11. Détecteur de métaux (20) portatif selon l'une des revendications 1 à 10, qui comporte, des moyens d'excitation (28) électriques qui sont reliés directement ou indirectement au convertisseur de puissance (25) et qui sont configurés pour transformer le courant électrique continu fourni par le convertisseur de puissance (25) en courant alternatif pour exciter les bornes de la ou des bobines (220, 221), en particulier, les moyens d'excitation (28) sont disposés dans le disque de détection (22) à proximité de la ou des bobines (220, 221).

12. Détecteur de métaux (20) portatif selon la revendication 11, dans lequel, les moyens d'excitation (28) sont disposés à une distance L des bornes de la ou des bobines (220, 221), de préférence, la distance L est inférieure ou égale au diamètre du disque de détection (22), en particulier, la distance L est inférieure ou égale à 30 cm, et de préférence, la distance L est inférieure ou égale à 10 cm.

13. Détecteur de métaux (20) portatif selon l'une des revendication 1 à 12, qui comporte, une chaine d'amplification et de filtration (200) des signaux captés et un convertisseur analogique/numérique (201) configuré pour transformer les signaux captés de manière analogique en signaux numériques, de préférence, le convertisseur analogique/numérique (201) et la chaine d'amplification et de filtration (200) sont disposés dans le disque de

14. Détecteur de métaux portatif selon l'une des revendications 1 à 13, dans lequel, les émetteurs/récepteurs (260, 271) du boitier de commande (27) et de l'unité de contrôle (26) sont sans fil, de préférence, les émetteurs/récepteurs (260, 271) sans fil fonctionnent selon un protocole de communication radio, optique ou acoustique.

15. Détecteur de métaux portatif selon l'une de revendications 1 à 14, dans lequel, les émetteurs/récepteurs (260, 271) du boitier de commande (27) et de l'unité de contrôle (26) sont filaires, un câble s'étendant entre le boitier de commande (27) et l'unité de contrôle (26) pour permettre aux émetteurs/récepteurs (260, 271) de dialoguer.
